# EUROPEAN PATENT APPLICATION

(11) **EP 4 831 043 A1**
(43) Date of publication of application: **28.10.2026**
(21) Application number: 26172147.6
(22) Date of filing: 14.04.2026
(51) Int. Cl.: B62D 25/12, B62D 35/00

(54) **IMPROVED FRONT PORTION OF A HEAVY VEHICLE**

(30) Priority: 16.04.2025 IT 202500008544
(71) Applicant: Iveco S.p.A., 10156 Torino (IT)
(72) Inventor: MORANO, Ivan Vito Antonio, 10156 TORINO (IT); ESPOSITO, Carmine Andrea, 10156 TORINO (IT)
(74) Representative: Studio Torta S.p.A.

(57) **Abstract**

Air blocking element (61) for a cab (3) of a commercial vehicle (1), the air blocking element (61) comprising a main portion (62) provided with an upper edge (62') and a lower edge (2"), wherein the lower edge (62") is substantially linear and at the same quota along a vertical axis (B) of the cab (3),
wherein, in use, the lower edge (62") is at the same height of the lower edge of a hood (4) of the vehicle (1) and wherein the lower edge (62"), in use, contours an lower portion of a perimeter (6) of a space (5) of the vehicle (1).

## Description

### CROSS-REFERENCE TO RELATED APPLICATIONS

This patent application claims priority from Italian patent application no. 102025000008544 filed on April 16, 2025, the entire disclosure of which is incorporated herein by reference.

### TECHNICAL FIELD

The present invention concerns a front portion of a heavy vehicle.

The present invention finds its preferred, although not exclusive, application in commercial vehicles such as trucks. Reference will be made to this application by way of example below.

### BACKGROUND OF THE INVENTION

Commercial vehicles such as trucks comprises a cab configured to house both operative systems of the vehicle and driver's seat arrangement.

Driver's seat arrangement is placed, in the most common configuration also known as "cab over", above the operative systems also for sake of providing a great view field over the road.

Accordingly, cabs of commercial vehicles have a vertical extension greater with respect to passenger vehicles thereby having increased problems linked to aerodynamic drag.

Indeed, aerodynamic drag increases squarely with respect to the speed of the vehicle. Accordingly, the problem is particularly felt in commercial vehicles that are further at high speed on highways for long distances.

It is therefore clear that reducing vehicle drag would inevitably reduce fuel consumption and therefore increase the efficiency of the vehicle. Such aim is valid both for traditional internal combustion engines and for electric-traction vehicles or hydrogen-based traction vehicles.

Therefore, the need is felt to reduce aerodynamic drag of commercial vehicle thereby increasing the efficiency of the vehicle.

An aim of the present invention is to satisfy the above mentioned needs in a cost-effective and optimized manner.

### SUMMARY OF THE INVENTION

The aforementioned aim is reached by a cab and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a cab of a commercial vehicle in an opened configuration and provided with the air blocking element according to the invention;

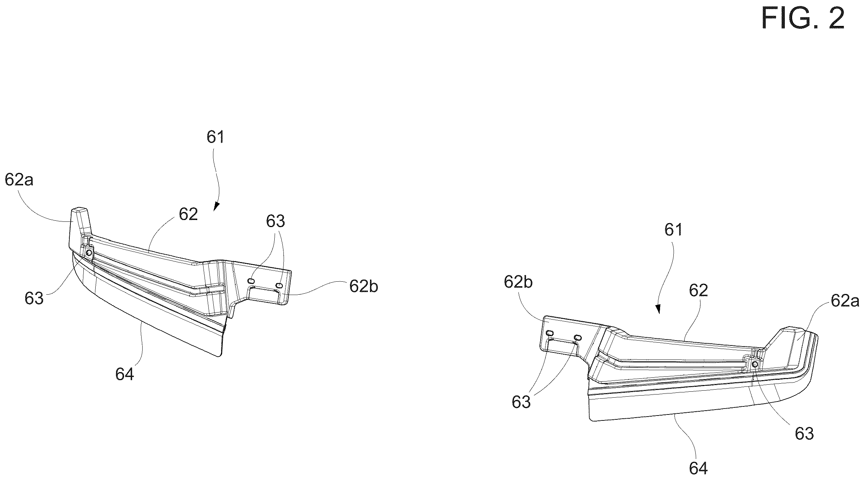

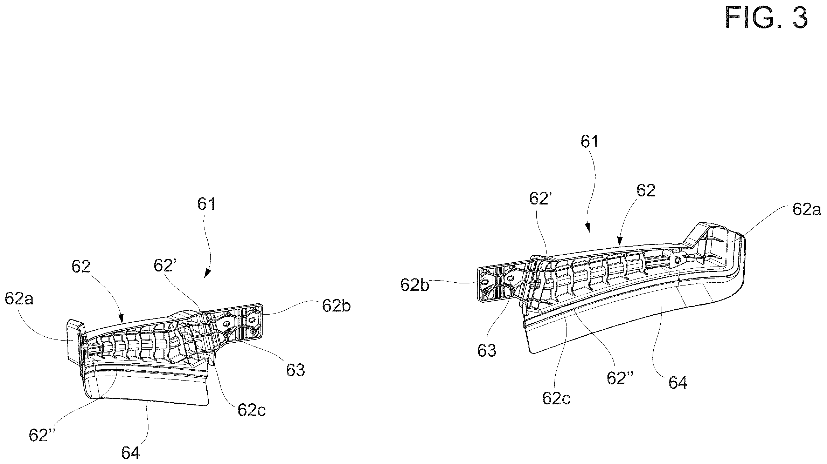

- Figures 2 and 3 are respectively a front and rear perspective view of the air blocking element according to the invention; and

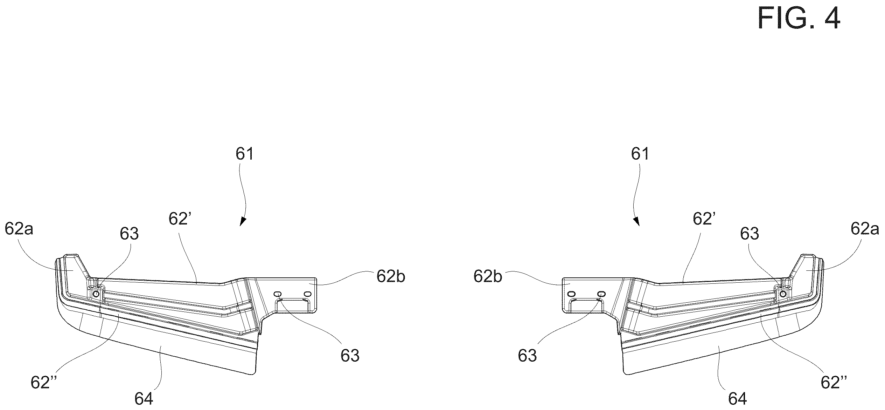

- Figure 4 is a front view of the air blocking element according to the invention.

### DETAILED DESCRIPTION OF THE INVENTION

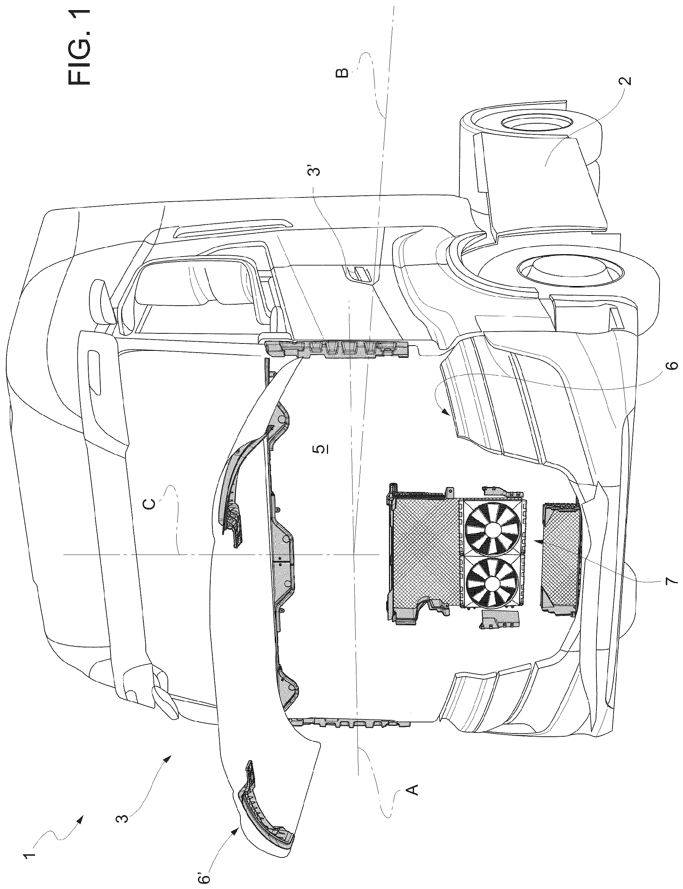

Figure 1 discloses a portion of a vehicle 1 such as a commercial vehicle, e.g. a truck, extending along a longitudinal axis A that coincides, in normal use, with driving direction of the vehicle 1, a transversal axis C and a vertical axis B.

In detail, vehicle 1 comprises a frame 2 and a cab 3 extending over the frame 2 along vertical axis B.

In particular, cab 3 comprises a hood 4 that is carried in a movable manner with respect to the body 3' of the cab 3 to assume a first configuration in which isolates a space 5 of cab 3 with respect to environment and a second configuration in which allows access to space 5 from the environment.

In detail, such hood 4 is linked to the body 3' of cab 3 by a movable connection (not shown) such as a hinge connection, configured to allow rotation of an upper portion of the hood 4 with respect to an axis parallel to transversal axis C.

The space 5 is therefore delimited by a perimeter 6 that matches with the shape defined by hood 4 in the first above mentioned configuration.

Space 5 may house different operative elements of the vehicle 1, in particular a portion of a traction system thereof, and in detail a heat management portion 7 comprising heat exchangers/ventilation means configured to cool down an operative fluid of the vehicle.

In particular, heat management portion 7 is placed in a central portion of the space 5 along transversal axis C and in particular extends along vertical axis B, starting from a lower edge of perimeter 6 and - in the disclosed embodiment - does not reach the upper edge thereof.

Advantageously, the cab 3 comprise a plurality of elements configured to direction the airflow impacting, during driving, on the hood 4 in order to reduce aerodynamic drag.

In detail, the elements can be carried by the hood 4 or by the body 3' of cab 3 along perimeter 6 of the space 5 or housed within space 5. In case such elements are carried body 3' or within space 5, they are preferably, in use, in contact with the hood 4.

In particular, the elements comprise:
- Sealing elements configured to avoid air passage through the hood 4 or between the hood 4 and the body 3 via space 5; and/or
- Guiding elements configured to channel and direction air passage through the hood 4 within space 5.

In particular, cab 3 comprises an air blocking element 61 configured to block the air passage within the hood 4 and the body 3' along an lower portion of the hood 4 along vertical axis B, in particular along a pair of portions along the transversal extension of the hood 4 along transversal axis C.

Therefore, in the disclosed embodiment, two blocking elements 61 are present, at opposite portions with respect to vertical axis C along transversal axis B direction,

In the following, since such two air blocking elements 61 are equal for each side of the hood 4, only one will be described for sake of brevity

Blocking element 61 comprises essentially a main portion 12 that is shaped as a contoured plate having a variable shape to mate with the shape of the hood 4.

The main portion essentially comprises an inner portion 62a and an outer portion 62b along transversal axis C direction.

The inner edge and outer portions 62a, 62b both define respectively at least one opening 63 configured to allow fixation of the main portion 62 to the hood 4.

The main portion 12 defines an upper edge 62' and a lower edge 62'' along vertical axis B. In detail, the lower edge 62'' is substantially at the same quota along vertical axis B and the upper edge 62' has a variable extension along vertical axis B with respect to lower edge 62'.

In detail, in use, the lower edge 62" is at the same height of a portion of the lower edge of the hood 4.

In detail,
In detail, the lower edge 62" is provided with a sealing 64 configured to be in contact with the hood 4 thereby locking air passage between hood 4 and perimeter 6.

In particular, sealing 64 can be a polymeric, rubber, sealing, more in detail an extrusion sealing.

Preferably, except for sealings 64, the blocking element 61 is realized in polymeric material such as plastic.

It is furthermore noticed that the main portion 62 comprises an outer side that is substantially smooth and an inner side that is provided with a reinforced portion 62c comprising a pattern of ridges configured to increase mechanical resistance of the main portion 62.

In particular, in the disclosed embodiment the reinforced portion 62c is a honeycomb structure.

The operation of the embodiment of the invention as described above is the following.

The blocking element 61 allows blocking air passing through the vertical space between hood 4 and body 3 thereby reducing aerodynamic drag.

In view of the foregoing, the advantages of the air blocking element, cab and vehicle according to the invention are apparent.

Thanks to the claimed blocking element, the air passage through the space between an upper portion of the hood and the body of the cab is avoided.

In particular, the proposed shape is voted to allow housing of required operative systems while blocking air passage.

Therefore, air drag is reduced and consequently vehicle fuel consumption.

Furthermore, the realization in plastic material and in low pieces, e.g. by molding, allows cost-effective production of the blocking element.

It is clear that modifications can be made to the described air blocking element, cab and vehicle which do not extend beyond the scope of protection defined by the claims.

For example, the cab of the vehicle may be different and similarly hood. Accordingly, the shape and opening/s of the portions of the vehicular element claimed may be different.

## Claims

1. Cab (3) for a commercial vehicle (1) comprising a body (3') and a hood (4) connected to the body (3') by a movable connection to selectively allow or deny access to a space (5) realized in said body (3'), said cab (3) being provided with an air blocking element (61) , said air blocking element (61) being placed between an upper edge of said hood (4) and said body (3') to block air passing through such upper edge of said hood (4) and said body (3'),
said air blocking element (61) comprising a main portion (62) provided with an upper edge (62') and a lower edge (2"), wherein said lower edge (62'') is substantially linear and at the same quota along a vertical axis (B) of said cab (3),
wherein, in use, said lower edge (62") is at the same height of the lower edge of a hood (4) of said vehicle (1) and wherein, said lower edge (62"), in use, contours an lower portion of a perimeter (6) of a space (5) of said vehicle (1)

2. Cab according to claim 1, wherein said main portion (62) comprises an inner portion (62b) and an outer portion (62a) along a transversal axis (C) of said vehicle (1) each between said inner and outer portions (62b, 62a) defining at least an opening (63) configured to allow connection of said main portion to said hood (4).

3. Cab according to claim 1 or 2, therein said lower edge (62") comprises a sealing (14).

4. Cab according to claim 3, wherein said sealing (14) is a rubber sealing.

5. Cab according to any of the preceding claims, wherein said main portion (62) is realized in polymeric material.

6. Cab according to any of the preceding claims, wherein said main portion (12) is realized as a single element.

7. Cab according to any of the preceding claims, wherein said main portion (62) comprise an outer side that is smooth and an inner side that comprises a reinforced portion (62c).

8. Cab according to claim 7, wherein said reinforced portion (62c) comprise a pattern of ridges.

9. Cab according to claim 7 or 8, wherein said reinforced portion (62c) comprise a honeycomb structure.

10. Cab according to any of the preceding claims, wherein said air blocking element (11) is carried by said hood (4).

11. Vehicle (1) comprising a cab according to any of the preceding claims.
